# EUROPÄISCHE PATENTANMELDUNG

(11) **EP 2 505 443 A1**
(43) Veröffentlichungstag der Anmeldung: **03.10.2012**
(21) Anmeldenummer: 12001755.3
(22) Anmeldetag: 15.03.2012
(51) Int. Cl.: B60T 8/32, B60T 8/40

(54) **Vorrichtung und Verfahren zur Erzeugung eines Bremsdruckes in einem Kraftfahrzeug**

(30) Priorität: 31.03.2011 DE 102011015692
(71) Anmelder: Volkswagen Aktiengesellschaft, 38440 Wolfsburg (DE)
(72) Erfinder: Wykowski, Ellen, Dr., 39116 Magdeburg (DE); Olders, Stefan, 38518 Gifhorn (DE)

(57) **Zusammenfassung**

Die Erfindung betrifft ein Verfahren und eine Vorrichtung zur Erzeugung eines Bremsdruckes in einem Kraftfahrzeug, wobei die Vorrichtung (1) mindestens einen spannungsgesteuerten Aktor (2) zur unmittelbaren oder mittelbaren Erzeugung eines Bremsdruckes und mindestens Steuereinrichtung (6) umfasst, wobei mittels der Steuereinrichtung (6) eine Versorgungsspannung (Uᵥ) des Aktors (2) einstellbar ist, wobei die Vorrichtung (1) eine zusätzliche Spannungsquelle (8) mit einer vorbestimmten Ausgangsspannung (U_{z}) umfasst, wobei die vorbestimmte Ausgangsspannung (U_{z}) der Versorgungsspannung (Uᵥ) des Aktors (2) zuschaltbar ist.

## Beschreibung

Die Erfindung betrifft eine Vorrichtung sowie ein Verfahren zur Erzeugung eines Bremsdrucks in einem Kraftfahrzeug.

In Kraftfahrzeugen, insbesondere in Automobilen, wird eine Bremskraft oder ein Bremsdruck in der Regel mittels mit einer Hilfsenergie gespeisten Aktoren erzeugt. Beispielsweise kann ein solcher Bremsdruck oder eine solche Bremskraft mit Hilfe von hydraulischen Aktoren oder elektromechanischen Aktoren erzeugt werden.

Weiter bekannt sind Kraftfahrzeuge mit so genannten Gefahrenerkennungssystemen. Diese Gefahrenerkennungssysteme dienen einer Erkennung einer vorhandenen oder sich anbahnenden Gefahrensituation und gegebenenfalls einer Warnung eines Kraftfahrzeugführers.

Gefahrenerkennungssysteme können auch als so genannte PreCrash-Sicherheitssysteme bezeichnet werden, die auf Basis von Sensorsignalen einer Umfeldsensorik einen möglichen Unfall bereits vor einem.Aufprall detektieren. Falls ein Kraftfahrzeugführer durch eine entsprechende Warnung nicht zu einer ausreichenden Abwehrreaktion veranlasst werden kann, kann eine automatische Bremsung des Kraftfahrzeugs eingeleitet werden. Hierbei wird beispielsweise bei einer steigenden Unfallgefahr zuerst eine Teilbremsung und anschließend, ab dem Zeitpunkt einer physikalischen Unvermeidbarkeit des Unfalls, eine Vollbremsung durchgeführt.

Die DE 103 03 578 A1 offenbart ein Gefahrenerkennungssystem für Fahrzeuge mit mindestens einer seitlichen und rückwärtigen Umgebungserfassung, Umgebungsinterpretation und Fahrerunterreaktionsunterstützung. Weiter umfasst das Gefahrenerkennungssystem mindestens eine auf die Fahrzeugbremsanlage, die Fahrzeugtenkanlage und/oder andere Fahrzeugbaugruppen einwirkenden informations-, Steuer- und/oder Regeleinrichtung, wobei letztere von den Auswerte- und Interpretationseinheiten pro Sensor oder Sensorgruppe zur Ermittlung von Bewegungsdaten beeinflusst werden. Auch offenbart die Druckschrift, dass zur Verkürzung einer Bremsenansprechzeit ein Bremsdruck erhöht werden kann.

Nachteilig ergibt sich, dass bei unklaren Verkehrslagen oder z.B. Sichtverdeckung der Umfeldsensorik ein bevorstehender Unfall von der Umfeldsensorik oft erst spät und im schlechtesten Fall erst erkannt wird, falls ein Unfall physikalisch unvermeidbar ist. In derartigen Fällen wird direkt eine Vollbremsung eingeleitet.

Gängige Bremssysteme benötigen für einen selbsttätigen Aufbau des vollständigen Bremsdruckes oder der vollständigen Bremskraft eine systemspezifische Zeit, die beispielsweise im Bereich von 800 ms liegen kann.

Es stellt sich das technische Problem, ein Verfahren und eine Vorrichtung zur Erzeugung eines Bremsdruckes zu schaffen, die, insbesondere im Fall einer erkannten Gefahrensituation, eine Zeitdauer zum vollständigen Aufbau des Bremsdruckes oder der Bremskraft durch einen Aktor verkürzt.

Die Lösung des technischen Problems ergibt sich durch die Gegenstände mit den Merkmalen der Ansprüche 1 und 8. Weitere vorteilhafte Ausgestaltungen der Erfindung ergeben sich aus den Unteransprüchen.

Vorgeschlagen wird eine Vorrichtung zur Erzeugung eines Bremsdruckes in einem Kraftfahrzeug. Die Vorrichtung umfasst mindestens einen spannungsgesteuerten Aktor zur unmittelbaren oder mittelbaren Erzeugung eines Bremsdruckes. Der spannungsgesteuerte Aktor kann z.B. eine elektromechanische Bremse sein, wobei die elektromechanische Bremse einen Bremsdruck oder eine Bremskraft unmittelbar erzeugt. Auch kann der Aktor, wie nachfolgend näher erläutert, ein Motorpumpenaggregat sein, in welchem eine Elektromaschine eine hydraulische Pumpe antreibt, die wiederum zur Erzeugung eines Bremsdruckes oder einer Bremskraft dient. In diesem Fall dient der Aktor zur mittelbaren Erzeugung einer Bremskraft oder eines Bremsdruckes.

Spannungsgesteuert bezeichnet hierbei, dass eine Geschwindigkeit eines Aufbaus und/oder eine Höhe eines mittels des Aktors zu erzeugenden Bremsdruckes abhängig von einer Versorgungsspannung, insbesondere einem zeitlichen Verlauf und/oder einer Höhe dieser Versorgungsspannung, ist. ,

Weiter umfasst die Vorrichtung mindestens eine Steuereinrichtung, wobei mittels der Steuereinrichtung eine Eingangs- oder Versorgungsspannung des Aktors einstellbar ist. Insbesondere ist mittels der Steuereinrichtung eine Höhe und/oder ein zeitlicher Verlauf der Versorgungsspannung des Aktors einstellbar. Die Steuereinrichtung kann beispielsweise auf der Platine des ESP- Steuergerätes eines so genannten ESP-Hydraulikaggregats integriert sein.

Erfindungsgemäß umfasst die Vorrichtung eine zusätzliche Spannungsquelle mit einer vorbestimmten Ausgangsspannung. Die vorbestimmte Ausgangsspannung ist der mittels der Steuereinrichtung eingestellten Versorgungsspannung des Aktors zuschaltbar.

Die zusätzliche Spannungsquelle kann hierbei beispielsweise eine Batterie, ein Akkumulator oder ein Kondensator sein.

Hierdurch ist der spannungsgesteuerter Aktor in vorteilhafter Weise zumindest zeitweise mit einer erhöhten Versorgungsspannung betreibbar. Hierdurch ergibt sich wiederum in vorteilhafter Weise ein zeitlich schneller Aufbau eines Bremsdruckes oder einer Bremskraft.

Eine Höhe der Zusatzspannung kann z.B, mittels Vorversuchen in Abhängigkeit einer Funktionssicherheit und/oder einer Betätlgungshäufigkeit und/oder einer möglichen Lebensdauerreduktion des Aktors gewählt werden. Auch kann eine Zeitdauer eines Zuschaltens in Abhängigkeit der vorhergehend genannten Kriterien gewählt werden. So kann z. B. eine vorbestimmte Ausgangsspannung, die eine Zusatzspannung darstellt, nur für eine vorzugsweise kurze Zeit zur Versorgungsspannung des Aktors zugeschaltet werden.

Durch die Anordnung einer zusätzlichen Spannungsquelle kann in vorteilhafter Weise erreicht werden, dass der Aktor für einen Normalbetrieb eines Kraftfahrzeugs dimensioniert werden kann; der nur in Ausnahmefällen mit erhöhter Versorgungsspannung betrieben werden muss. Hierdurch ergibt sich im Vergleich mit einer Verwendung eines Aktors, dessen Versorgungsspannung bereits für einen schnellen Aufbau eines Bremsdruckes in derartigen Ausnahmefällen ausgelegt ist, kostengünstigere Ausführung der erfindungsgemäßen Vorrichtung.

In einer weiteren Ausführungsform umfasst die Vorrichtung zusätzlich eine Einrichtung zur Gefahrenerkennung. Die Einrichtung zur Gefahrenerkennung erzeugt mindestens ein eine Gefahrensituation repräsentierendes Ausgangssignal. Das Ausgangssignal kann beispielsweise eine Ausgangsspannung sein. Auch kann das Ausgangssignal in Form eines Datenpakets vorliegen, welches z.B. über ein Bussystem des Kraftfahrzeugs, beispielsweise einen CAN-Bus, übertragen wird. Die Einrichtung zur Gefahrenerkennung kann beispielsweise Sensorsignale von Sensoren zur Erfassung eines Umfeldes des Kraftfahrzeuges auswerten. Beispielsweise können mittels der Einrichtung zur Gefahrenerkennung stationäre Positionen und/oder Trajektorien von weiteren Verkehrsteilnehmern relativ zu dem Kraftfahrzeug ermittelt werden und in Bezug zu einer stationären Position und/oder einer Trajektorie des Kraftfahrzeugs gesetzt werden Weiter können mittels der Einrichtung zur Gefahrenerkennung eine Geschwindigkeit, eine Richtung und weitere Bewegungseigenschaften des Kraftfahrzeugs und/oder weiterer Verkehrsteilnehmer ausgewertet werden. Auch können mittels der Einrichtung zur Gefahrenerkennung zukünftige Kollisionen detektiert werden, beispielsweise falls sich das Kraftfahrzeug zu einem vorbestimmten zukünftigen Zeitpunkt an einer gleichen Position wie ein weiterer Verkehrsteilnehmer befinden wird, wobei auch eine räumliche Ausdehnung des Kraftfahrzeuges und/oder des weiteren Verkehrsteilnehmers in die Bewertung einer Kollision einfließen kann. Auch kann mittels der Einrichtung zur Gefahrenerkennung ermittelt werden, ob eine Kollision physikalisch vermeidbar oder unvermeidbar ist. Eine Kollision kann beispielsweise als unvermeidbar klassifiziert werden, falls auch bei einer Vollbremsung des Fahrzeugs eine Kollision nicht mehr verhindert werden kann.

Die vorbestimmte Ausgangsspannung ist der Versorgungsspannung des Aktors in Abhängigkeit des die Gefahrensituation repräsentierenden Ausgangssignals zuschaltbar. Beispielsweise kann die vorbestimmte Ausgangsspannung der Versorgungsspannung des Aktors zugeschaltet werden, falls das die Gefahrensituation repräsentierende Ausgangssignal eine unvermeidbare Kollision repräsentiert. Auch kann die Ausgangsspannung der Versorgungsspannung zugeschaltet werden, falls das die Gefahrensituation repräsentierende Ausgangssignal eine schwer vermeidbare Kollision repräsentiert, wobei eine schwer vermeidbare Kollision z. B. eine Situation beschreibt, bei der eine Kollision nur durch eine Volibremsung, z.B. einer Vollbremsung mittels einer normal zulässigen maximalen oder mittels einer erhöhten Versorgungsspannung, verhinderbar ist.

Ist das die Gefahrensituation repräsentierende Ausgangssignal beispielsweise eine Ausgangsspannung, so kann eine Gefahrensituation beispielsweise durch eine Höhe dieser Spannung repräsentiert werden. Beispielsweise kann eine Gefahrensituation einer nicht vermeidbaren Kollision mit einer Ausgangsspannung repräsentiert werden, die höher als eine erste Referenzspannung ist. Analog kann eine Gefahrensituation einer schwer vermeidbaren Kollision mittels einer Ausgangsspannung repräsentiert werden, die höher als eine zweite Referenzspannung, aber geringer als die erste Referenzspannung ist.

Selbstverständlich kann eine Klassifikation der Gefahrensituation auch in einer Form oder als Inhalt eines Datensignals oder Datenpakets codiert sein.

Hierdurch ergibt sich in vorteilhafter Weise die Zuschaltung der vorbestimmten Ausgangsspannung der zusätzlichen Spannungsquelle und somit ein schnellerer Aufbau eines insbesondere maximalen Bremsdruckes oder einer maximalen Bremskraft in Abhängigkeit einer klassifizierten Gefahrensituation, insbesondere in Abhängigkeit einer als nicht vermeidbare Kollision klassifizierten Gefahrensituation. Hierdurch erfolgt ein zeitlich schneller Aufbau eines maximalen Bremsdruckes oder einer maximalen Bremskraft, insbesondere dann, wenn eine nicht mehr vermeidbare Kollision zeitlich spät detektiert wird.

In Abhängigkeit des die Gefahrensituation repräsentierenden Ausgangssignals kann hierbei direkt zu Beginn eines Bremsvorganges oder auch während eines bereits eingeleiteten autonomen Bremsvorganges die vorbestimmte Ausgangsspannung zugeschaltet werden.

Insgesamt kann somit in vorteilhafter Weise eine kinetische Energie bei einer Kollision verringert werden, wodurch in vorteilhafter Weise eine Betriebssicherheit des Kraftfahrzeuges erhöht wird.

Eine Zuschaltung vorbestimmten Ausgangsspannung während eines bereits eingeleiteten autonomen Bremsvorganges kann beispielsweise dann erfolgen, wenn detektiert wird, dass z.B. aufgrund einer Richtungs- und/oder Geschwindigkeitsänderung eines weiteren Verkehrsteilnehmers eine eigentlich durch den eingeleiteten Bremsvorgang vermeidbare Kollision unvermeidbar wird.

In einer weiteren Ausführungsform umfasst mindestens ein Anschlusszweig des Aktors mindestens ein Schaltelement, einen ersten Teilzweig und mindestens einen weiteren Teilzweig. Ein Anschlusszweig kann hierbei beispielsweise zur Spannungsversorgung eines Spannungseingangs des Aktors dienen. Der Aktor kann hierbei einen ersten Spannungseingang zum Anschluss der Versorgungsspannung und einen zweiten Spannungseingang zum Anschluss einer Masse aufweisen. Hierbei kann der Anschlusszweig z. B. dem ersten Spannungseingang des Aktors zugeordnet sein.

In dem mindestens zweiten Teilzweig ist die zusätzliche Spannungsquelle angeordnet, wobei mittels des Schaltelements der erste oder der mindestens eine weitere Teilzweig in den Anschlusszweig des Aktors schaltbar ist. In einer ersten Konfiguration besteht der Anschlusszweig des Aktors also aus dem ersten Teilzweig, wobei mittels des ersten Teilzweiges eine Versorgungsspannung des Aktors, beispielsweise an dem ersten Spannungseingang, anliegt. In einer zweiten Konfiguration besteht der Anschlusszweig des Aktors aus dem zweiten Teilzweig, wobei in der zweiten Konfiguration die Versorgungsspannung und die vorbestimmte Ausgangsspannung der zusätzlichen Spannungsquelle an, z.B. dem ersten Spannungseingang des Aktors, dem Aktor anliegt. Hierdurch ergibt sich in vorteilhafter Weise eine einfach zu realisierende Zuschaltung der zusätzlichen Spannungsquelle mit der vorbestimmten Ausgangsspannung.

In einer weiteren Ausführungsform ist das Schaltelement ein relaisgesteuertes Schaltelement. Hierdurch ergibt sich in vorteilhafter Weise eine einfache und robuste Ausführung des Schaltelements. Alternativ kann das mindestens eine Schaltelement auch als elektrisches oder elektronisches Schaltelement, beispielsweise als IGBT (insulated gate bipolar transistor) oder MOSFET (metal oxide semiconductor field effect transistor) ausgeführt sein. Hierdurch ergibt sich in vorteilhafter Weise ein mittels elektrischer Signale, insbesondere einer Gate-Spannung, einstellbarer Schaltzustand des Schaltelements.

In einer weiteren Ausführungsform ist ein Schaltzustand des mindestens einen Schaltelements in Abhängigkeit des die Gefahrensituation repräsentierenden Ausgangssignals einstellbar. Beispielsweise kann das relaisgesteuerte Schaltelement in Abhängigkeit einer Eingangsspannung des relaisgesteuerten Schaltelements schalten, wobei die Eingangsspannung beispielsweise eine Ausgangsspannung der Einrichtung zur Gefahrenerkennung sein kann. Auch kann das relaisgesteuerte Schaltelement mittels einer weiteren Steuereinrichtung angesteuert werden, wobei die weitere Steuereinrichtung z.B. ein Datensignal oder ein Datenpaket, das z.B, von der Einrichtung zur Gefahrenerkennung an die weitere Steuereinrichtung übertragen wurde, auswertet und in Abhängigkeit des ausgewerteten Signals das relaisgesteuerte Schaltelement ansteuert. Hierdurch ist in vorteilhafter Weise eine einfache und einfach zu implementierende Einstellung des Schaltelements in Abhängigkeit des die Gefahrensituation repräsentierenden Ausgangssignals einstellbar.

In einer weiteren Ausführungsform wird der mindestens eine weitere Teilzweig in einen Anschlusszweig des Aktors geschaltet, falls das die Gefahrensituation repräsentierende Ausgangssignal einen vorbestimmten Schwellwert überschreitet oder unterschreitet. Hierfür kann die erfindungsgemäße Vorrichtung beispielsweise ein als Komparator dienendes elektrisches oder elektronisches Bauteil umfassen, welches ein Schaltsignal des Schaltelements erzeugt, falls das die Gefahrensituation repräsentierende Ausgangssignal größer oder kleiner als ein vorbestimmter Schwellwert ist. Hierdurch ergibt sich in vorteilhafter Weise eine einfache Ansteuerung des Schaltelements in Abhängigkeit des die Gefahrensituation repräsentierenden Ausgangssignals.

In einer weiteren Ausführungsform ist der Aktor ein Motorpumpenaggregat, wobei das Motorpumpenaggregat eine spannungsgesteuerte Elektromaschine umfasst, die mechanisch mit einer Hydraulikpumpe zur Erzeugung eines hydraulischen Bremsdruckes gekoppelt ist.

Hierdurch ergibt sich in vorteilhafter Weise eine Erweiterung gängiger Bremssysteme in Kraftfahrzeugen, die in der Regel einen Bremsdruck oder eine Bremskraft mittels eines Motorpumpenaggregats erzeugen.

Weiter vorgeschlagen wird ein Verfahren zur Erzeugung eines Bremsdruckes in einem Kraftfahrzeug, wobei mittels mindestens eines spannungsgesteuerten Aktors unmittelbar oder mittelbar ein Bremsdruck erzeugt wird. Weiter wird mittels einer Steuereinrichtung eine Versorgungsspannung des Aktors eingestellt. Erfindungsgemäß ist eine zusätzliche vorbestimmte Ausgangsspannung einer Spannungsquelle der Versorgungsspannung des Aktors zuschaltbar. Hierdurch ergibt sich in vorteilhafter Weise ein schnellerer Aufbau eines Bremsdruckes oder einer Bremskraft. Die zusätzliche vorbestimmte Ausgangsspannung kann im erfindungsgemäßen Verfahren nur für eine vorbestimmte Zeitdauer und/oder in einer vorbestimmten Höhe der Versorgungsspannung zugeschaltet werden.

In einer weiteren Ausführungsform wird die zusätzliche vorbestimmte Ausgangsspannung einer Spannungsquelle der Versorgungsspannung des Aktors in Abhängigkeit eines eine Gefahrensituation repräsentierenden Ausgangssignals zugeschaltet, wobei das die Gefahrensituation repräsentierende Ausgangssignal mittels einer Einrichtung zur Gefahrenerkennung erzeugt wird.

Hierdurch ergibt sich in vorteilhafter Weise ein schneller Aufbau eines Bremsdruckes oder einer Bremskraft in Abhängigkeit einer Gefahrensituation, insbesondere einer Gefahrensituation, die als unvermeidbare Kollision klassifiziert wurde.

In einer weiteren Ausführungsform umfasst mindestens ein Anschlusszweig des Aktors mindestens ein Schaltelement, einen ersten Teilzweig und mindestens einen weiteren Teilzweig, wobei in dem mindestens einen weiteren Teilzweig die zusätzliche Spannungsquelle angeordnet ist, wobei mittels des Schaltelements der erste oder mindestens eine weitere Teilzweig in den Anschlusszweig des Aktors geschaltet wird. Hierdurch ergibt sich in vorteilhafter Weise eine einfach zu implementierende und realisierende Zuschaltung der zusätzlichen vorbestimmten Ausgangsspannung.

Die Erfindung wird anhand eines Ausführungsbeispiels näher erläutert, Die einzige Figur zeigt ein schematisches Blockschaltbild einer Vorrichtung zur Erzeugung eines Bremsdruckes in einem Kraftfahrzeug.

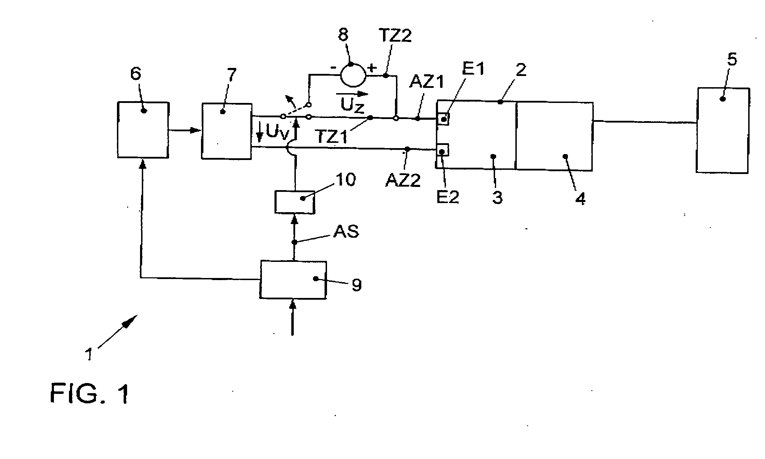

In Fig. 1 ist ein schematisches Blockschaltbild einer Vorrichtung 1 zur Erzeugung eines Bremsdruckes in einem nicht dargestellten Kraftfahrzeug dargestellt. Die Vorrichtung 1 umfasst einen spannungsgesteuerten Aktor 2, der als Motorpumpenaggregat ausgebildet ist Der Aktor umfasst hierbei eine Elektromaschine 3 und eine mit der Elektromaschine 3 mechanisch gekoppelte Hydraulikpumpe 4, die über entsprechende Hydraulikleitungen mit Fahrzeugbremsen 5, von denen exemplarisch nur eine Fahrzeugbremse dargestellt ist, verbunden ist. Weiter umfasst die Vorrichtung 1 eine Steuereinrichtung 6. Die Steuereinrichtung 6 ist signaltechnisch mit einer Treiberstufe 7 gekoppelt, wobei mittels der Steuereinrichtung 6 eine Versorgungsspannung Uᵥ des Aktors 2 einstellbar ist, Hierfür ist die Treiberstufe 7 über einen ersten Anschlusszweig AZ1 mit einem ersten Spannungseingang E1 des Aktors 2 verbunden. Weiter ist die Treiberstufe 7 über einen zweiten Anschlusszweig AZ2 mit einem zweiten Spannungseingang E2 des Aktors 2 verbunden. Der zweite Anschlusszweig AZ2 kann hierbei mit einer Fahrzeugmasse elektrisch verbunden sein. Die Vorrichtung 1 umfasst weiter eine zusätzliche Spannungsquelle 8 mit einer vorbestimmten Ausgangsspannung U_{z}, wobei die vorbestimmte Ausgangsspannung U_{z} der Versorgungsspannung Uv des Aktors 2 zuschaltbar ist.

Weiter umfasst die Vorrichtung 1 eine Einrichtung 9 zur Gefahrenerkennung, die mindestens ein eine Gefahrensituation repräsentierendes Ausgangssignal AS erzeugt. Die Einrichtung 9 zur Gefahrenerkennung ist datentechnisch mit der Steuereinrichtung 6 und einem relaisgesteuerten Schaltelement 10 verbunden. Der erste Anschlusszweig AZ1 umfasst das relaisgesteuerte Schaltelement 10, einen ersten Teilzweig TZ1 und einen weiteren Teilzweig TZ2, wobei in dem weiteren Teilzweig TZ2 die zusätzliche Spannungsquelle 8 angeordnet ist. Mittels des Schaltelements 10 ist der erste Teilzweig TZ1 oder der weitere Teilzweig TZ2 in den ersten Anschlusszweig AZ1 des Aktors 2 schaltbar. In einer ersten Schaltkonfiguration, in der der erste Teilzweig TZ1 in den ersten Anschlusszweig AZ1 geschaltet ist (wie in Fig. 1 dargestellt) liegt allein die Versorgungsspannung Uᵥ an den Spannungseingängen E1, E2 des Aktors 2 an. In einer zweiten, gestrichelt dargestellten, Schaltkonfiguration ist der weitere Teilzweig TZ2 in den ersten Anschlusszweig AZ1 geschaltet, womit an den Spannungseingängen E1, E2 eine Spannung anliegt, die sich aus der Summe der Versorgungsspannung Uv und der zusätzlichen vorbestimmten Ausgangsspannung. U_{z} ergibt.

Ein Schaltzustand des relaisgesteuerten Schaltelements 10 ist in Abhängigkeit des die Gefahrensituation repräsentierenden Ausgangssignals AS einstellbar.

### Bezugszeichenliste

- 1: Vorrichtung zur Erzeugung eines Bremsdruckes
- 2: Aktor
- 3: Elektromaschine
- 4: Pumpe
- 5: Bremse
- 6: Steuereinrichtung
- 7: Treiberstufe
- 8: zusätzliche Spannungsquelle
- 9: Einrichtung zur Gefahrenerkennung
- 10: relalsgesteuertes Schaltelement
- AZ1: erster Anschlusszweig
- AZ2: zweiter Anschlusszweig
- E1: erster Spannungseingang
- E2: zweiter Spannungselngang
- TZ1: erster Teilzweig
- TZ2: weiterer Teilzweig
- AS: Ausgangssignal
- Uᵥ: Versorgungsspannung
- U_{z}: vorbestimmte Ausgangsspannung

## Patentansprüche

1. Vorrichtung zur Erzeugung eines Bremsdruckes in einem Kraftfahrzeug, wobei die Vorrichtung (1) mindestens einen spannungsgesteuerten Aktor (2) zur unmittelbaren oder mittelbaren Erzeugung eines Bremsdruckes und mindestens Steuereinrichtung (6) umfasst, wobei mittels der Steuereinrichtung (6) eine Versorgungsspannung (Uᵥ) des Aktors (2) einstellbar ist,
**dadurch gekennzeichnet, dass**
die Vorrichtung (1) eine zusätzliche Spannungsquelle (8) mit einer vorbestimmten Ausgangsspannung (U_{z}) umfasst, wobei die vorbestimmte Ausgangsspannung (U_{z}) der Versorgungsspannung (Uᵥ) des Aktors (2) zuschaltbar ist.

2. Vorrichtung nach Anspruch 1, wobei die Vorrichtung (1) zusätzlich eine Einrichtung (9) zur Gefahrenerkennung umfasst, wobei die Einrichtung (9) zur Gefahrenerkennung mindestens ein eine Gefahrensituation repräsentierendes Ausgangssignal (AS) erzeugt, wobei die vorbestimmte Ausgangsspannung (U_{z}) der Versorgungsspannung (U_{z}) des Aktors (2) in Abhängigkeit des die Gefahrensituation repräsentierenden Ausgangssignals (AS) zuschaltbar ist.

3. Vorrichtung nach einem der vorangegangenen Ansprüche, **dadurch gekennzeichnet, dass** mindestens ein Anschlusszweig (AZ1) des Aktors (2) mindestens ein Schaltelement, einen ersten Teilzweig (TZ1) und mindestens einen weiteren Teilzweig (TZ2) umfasst, wobei in dem mindestens einen weiteren Teilzweig (TZ2) die zusätzliche Spannungsquelle (8) angeordnet ist, wobei mittels des Schaltelements der erste Teilzweig (TZ1) oder der mindestens eine weitere Teilzweig (TZ2) in den Anschlusszweig (AZ1) des. Aktors (2) schaltbar ist.

4. Vorrichtung nach Anspruch 3, **dadurch gekennzeichnet, dass** das Schaltelement ein relaisgesteuertes Schaltelement (10) ist.

5. Vorrichtung nach einem der Ansprüche 3 bis 4, **dadurch gekennzeichnet, dass** ein Schaltzustand des mindestens einen Schaltelements in Abhängigkeit des die Gefahrensituation repräsentierendes Ausgangssignals (AS) einstellbar ist.

6. Vorrichtung nach Anspruch 5, **dadurch gekennzeichnet, dass** der mindestens eine weitere Teilzweig (TZ2) in einen Anschlusszweig (AZ1) des Aktors (2) geschaltet wird, falls das die Gefahrensituation repräsentierende Ausgangssignal (AS) einen vorbestimmten Schwellwert überschreitet oder unterschreitet.

7. Vorrichtung nach einem der vorangegangenen Ansprüche, **dadurch gekennzeichnet, dass** der Aktor (2) ein Motorpumpenaggregat ist.

8. Verfahren zur Erzeugung eines Bremsdruckes in einem Kraftfahrzeug, wobei mittels mindestens eines spannungsgesteuerten Aktors (2) unmittelbar oder mittelbar ein Bremsdruck erzeugt wird, wobei mittels einer Steuereinrichtung (6) eine Versorgungsspannung (Uᵥ) des Aktors (2) eingestellt wird,
**dadurch gekennzeichnet, dass**
eine zusätzliche vorbestimmte Ausgangsspannung (U_{z}) einer zusätzlichen Spannungsquelle (8) der Versorgungsspannung (Uᵥ) des Aktors (2) zugeschaltet wird.

9. Verfahren nach Anspruch 8, **dadurch gekennzeichnet, dass** die zusätzliche vorbestimmte Ausgangsspannung (U_{z}) der zusätzlichen Spannungsquelle (8) der Versorgungsspannung (Uᵥ) des Aktors (2) in Abhängigkeit eines eine Gefahrensituation repräsentierenden Ausgangssignals (AS) zugeschaltet wird, wobei das die Gefahrensituation repräsentierende Ausgangssignal (AS) mittels einer Einrichtung (9) zur Gefahrenerkennung erzeugt wird.

10. Verfahren nach einem der Ansprüche 8 oder 9, **dadurch gekennzeichnet, dass** mindestens ein Anschlusszweig (AZ1) des Aktors (2) mindestens ein Schaltelement, einen ersten Teilzweig (TZ1) und mindestens einen weiteren Teilzweig (TZ2) umfasst, wobei in dem mindestens einen weiteren Teilzweig (TZ2) die zusätzliche Spannungsquelle (8) angeordnet ist, wobei mittels des Schaltelements der erste Teilzweig (TZ1) oder der mindestens eine weitere Teilzweig (TZ2) in den Anschlusszweig (AZ1) des Aktors (2) geschaltet wird.
